# EUROPEAN PATENT APPLICATION

(11) **EP 4 703 769 A1**
(43) Date of publication of application: **04.03.2026**
(21) Application number: 25460035.6
(22) Date of filing: 26.08.2025
(51) Int. Cl.: G01S 15/04, G01S 3/808, G01S 7/52, G01S 7/539

(54) **A METHOD FOR THE ACOUSTIC DETECTION OF DRONES IN PARTICULAR, AND A SYSTEM FOR IMPLEMENTING THE METHOD**

(30) Priority: 30.08.2024 PL 44963724
(71) Applicant: Corandi, Marcello, Anacorte, WA 98221 (US); S2G Technologies Srl, 00131 Rome (IT); Mlynarczyk, Adam, 61-680 Poznan (PL)
(72) Inventor: Mlynarczyk, Adam, 61-680 Poznan (PL); Lelis, Andrea Maria, 00199 Rome (IT); Corandi, Marcello, Anacorte, WA 98221 (US)
(74) Representative: Urbanska-Luczak, Barbara

(57) **Abstract**

Disclosed is a method for the acoustic detection of objects, especially of drones, and a system for the implementation of the method.

The sound from the surroundings is processed in a first beamforming strip 2 and in a second beamforming strip 3 and in a SODAR 4, the data from the first beamforming strip 2 and the second beamforming strip 3 is processed by means of an I²S bus, whereas the SODAR 4, as an analog sound originating from a loudspeaker acting as a microphone, is subjected to conversion into a digital signal in an analog-to-digital converter and is transmitted to a microcontroller 1, where in the microcontroller 1 the data is processed by a beamforming algorithm to obtain 18 signals from the first beamforming strip 2 and from the second beamforming strip 3 and one SODAR signal, and the microcontroller 1 preferably controls the sending of short signals into the surroundings in order to receive echoes from the first beamforming strip 2 and from the second beamforming strip 3 and the SODAR 4 and calculates the device-to-drone distance based on the time of sending and reflection of the echoes, additional data including wind direction and speed, temperature, and humidity are obtained from a meteorological station 5 and, based on correction tables, the data originating from the first beamforming strip 2 and from the second beamforming strip 3 and the SODAR 4 are recalculated, whereas an IMU and GPS sensor 6 is intended to provide information about the directionality and position of the system, an LTE modem 8 by means of which data is sent to a central computing computer 10, and a power supply system 7, further the data is sent to the central computing computer 10 and a server 11 where it is processed for all modules located in the surveyed region and, based on triangulation and/or machine learning models, the exact location of the drone or other object is calculated, in turn, the data from the central computing computer 10 is sent to the user via a website and is visualized.

## Description

The subject of the invention is a method for the acoustic detection of drones in particular, and a system for implementing the method.

The method enables the detection, analysis, and tracking of drones based on the analysis of acoustic signals.

Methods for the acoustic detection of drones in particular, and systems for implementing the method, are known. The acoustic detection of drones is based on the analysis of characteristic sound signals emitted by these devices. In recent years, a significant development in this field has been observed, as evidenced by numerous research works and practical implementations. Siewer, S., Andalibi, M., Bruder, S., Buchholz, J., Fernandez, R., Rizor, S., Slew-to-cue electro-optical and infrared sensor network for small UAS detection, tracking and identification, AIAA Scitech Forum, 2019, 225819 (2019) conducted pioneering research aimed at assessing the possibility of reducing false alarms generated by digital cameras through the integration of acoustic data. Their work represents an important step towards increasing the effectiveness of drone detection systems, particularly in the context of minimising undesirable reactions to other sound sources. Dumitrescu, C., Minea, M., Costea, I. M., Chiva, I. C., Semenescu, A., Development of an acoustic system for UAV detection, Sensors, 2020, 20(17), 1- 17 (2020) focused on the development of an intelligent acoustic system, capable of detecting, locating, and tracking drones. Their system, based on a spiral array of MEMS microphones, utilises advanced signal processing algorithms, such as spectrogram decomposition and adaptive filters. Various techniques were used for drone classification, including Cohen's class decomposition, log-Mel spectrograms, harmonic-percussive source separation, and analysis of raw audio waveforms. Ahn, J., and Kim, M. Y. (2021) in the publication Positional estimation of invisible drone using acoustic array with A-shaped neural network, International conference on Artificial Intelligence in Information and Communication, 2021, 9415272, 320-324 proposed a novel algorithm for estimating a drone's position, utilising an acoustic array. Their solution aims to supplement the limitations of vision systems, especially in situations where the drone is invisible to the camera due to terrain or atmospheric obstacles. The algorithm transforms sound data into images using a mel-spectrogram, which enables the fusion of data from visual and acoustic sensors. A convolutional neural network (CNN) was used to estimate the drone's position, achieving high accuracy. Kadyrov, D., Sedunov, A., Sedunov, N., Sutin, A., Salloum, H., Tsyuryupa, S., Improvements to the Stevens drone acoustic detection system, Proceedings of Meetings on Acoustics, 2022 46(1), 45001 (2022) constructed a drone detection and tracking system based on multiple acoustic sensors. The system utilises the Steered-Response Phase Transform (SRP-PHAT) technique and narrowband classification. Tests conducted with various multi-rotor drones allowed for the collection of acoustic signatures, which were used to develop a method for estimating detection distance using the passive sonar equation. Ding, S., Guo, X., Peng, T., Huang, X., Hong, X., Drone detection and tracking system based on fused acoustical and optical approaches, Advanced Intelligent Systems, 2023, 5(10), 2300251 (2023) presented an advanced drone detection and tracking system, utilising a 64-channel microphone array, LiDAR, and a digital camera.

This system is characterised by high sensitivity and localisation precision, as well as the ability to operate in difficult acoustic conditions thanks to the application of an environmental denoising model. Ivancic, J., Karunasiri, G., Alves, F., Directional resonant MEMS acoustic sensor and associated acoustic vector sensor, Sensors, 2023, 23(19), 8217 (2023) designed a micromechanical array of acoustic vector sensors that operates on the principle of resonance. This system provides high sensitivity and accuracy in measuring the direction of sound arrival, which is key for the precise localisation of drones. Fang, J., Li, Y., Ji, P. N., Wang, T., Drone detection and localization using enhanced fiber-optic acoustic sensor and distributed acoustic sensing technology, Journal of Lightwave Technology, 2023, 41(3), 822-831 (2023) utilised distributed acoustic sensing (DAS) technology with optical fibres for monitoring drones. Their system is characterised by ultra-high sensitivity and the ability to recover high-fidelity speech. Through the use of a series of fibre-optic acoustic sensors (FOAS), the system enables the precise localisation of drones by mapping the acoustic field and fusing data. In addition to the solutions mentioned above, many audio beamforming techniques have been developed and patented over the years. For example, the 2006 patent US20070263888A1 describes a method for shaping a surround sound beam using vertically offset transducers, providing a low-cost alternative to existing surround sound systems. Another example is WIPO patent PCT 2014 WO2015168901A1, which combines a microphone array with a camera, enabling the simultaneous capture of audio and video data. Popular devices, such as Apple's AirPods Max, also use patented audio beamforming techniques to improve sound quality and reduce noise. After the birth of more efficient EM radars during World War II, SODAR techniques found new interest mainly in academic research, primarily for atmospheric profiling, as described, for example, in patent US-7178408-B2 from 2007, "Sodar sounding of the lower atmosphere". In this example, acoustic profiling involves sounding the lower atmosphere, which entails the transmission of an acoustic chirp signal and the processing of returning echoes and disturbances using wavelet techniques and matched filters. Similarly, atmospheric and climate institutes, such as CNR Isac, have developed several instruments based on SODAR horn antennae for wind profiling, producing extensive literature on the subject, such as "Use of a High-Resolution Sodar to Study Surface-layer Turbulence at Night" by G. Mastrantonio et al., Boundary-Layer Meteorology, Volume 143, pages 177-188, (2012).

The patent is based on the ability of SODAR techniques to identify small changes in the wind profile, which in the presence of a drone can provide a large detectable echo signal if the emitted SODAR sound pulse is intense and limited to a range of hundreds of milliseconds. Two concurrent signals help in discrimination: time and intensity. The first measurable value can provide the exact distance of the target from the emitting antenna when the local speed of sound propagation is well estimated. The intensity can contribute to a more accurate assessment of the target's position when detection scenarios provide for more antennae for proper position triangulation.

The aim of the invention is to develop an effective method for the acoustic detection, in particular of drones, and tracking of drones over large areas, utilising the analysis of acoustic signals. The system is intended to ensure high detection accuracy, resistance to interference, and the ability to operate in various environmental conditions. Besides detecting drones, the method can be used for the detection of other objects.

The essence of the invention is a method for the acoustic detection of drones in particular, characterised in that sound from the surroundings is processed in a first beamforming strip and in a second beamforming strip and in a SODAR, wherein data from the first beamforming strip and the second beamforming strip is transmitted by means of an I²S bus, whereas the SODAR, as an analogue sound from a loudspeaker acting as a microphone, is subjected to conversion to a digital signal in an analogue-to-digital converter and is transmitted to a microcontroller, where in the microcontroller the data is processed by a beamforming algorithm to obtain signals from the first beamforming strip and from the second beamforming strip and one SODAR signal, and the microcontroller preferably controls the sending of short signals to the surroundings to collect echoes from the first beamforming strip and from the second beamforming strip and the SODAR, and calculates the device-to-drone distance based on the time of sending and reflection of the echoes, additional data on wind direction and speed, temperature, and humidity are taken from a meteorological station, and on the basis of correction tables, the data from the first beamforming strip and from the second beamforming strip and the SODAR are recalculated, whereas an IMU and GPS sensor is intended to provide information on the directionality and position of the system, an LTE modem by means of which data is sent to a central computing computer and a power supply system, further the data is sent to the central computing computer and a server where it is processed for all modules located in the surveyed region and on the basis of triangulation and/or machine learning models, the exact location of the drone or other object is calculated, in turn the data from the central computing computer is transmitted to the user via a website and are visualised.

A system for the acoustic detection of drones in particular, characterised in that it comprises at least one microcontroller, which is connected on one side to a first beamforming strip and/or to a second beamforming strip and/or to a SODAR, and on the other side to a meteorological station, an IMU and GPS sensor, and a power supply system, further the microcontroller is connected via an LTE modem and the internet to a central computing computer, which is connected to a server, wherein the LTE modem is connected via the internet to the server.

Thanks to the application of the solution according to the invention, the following technical and functional effects were achieved:
- high accuracy of drone detection and tracking,
- ability to detect multiple drones simultaneously,
- resistance to interference and environmental conditions,
- large detection range,
- low weight and dimensions of portable devices,
- high resistance of stationary devices to environmental conditions,
- possibility of integration with other security systems.

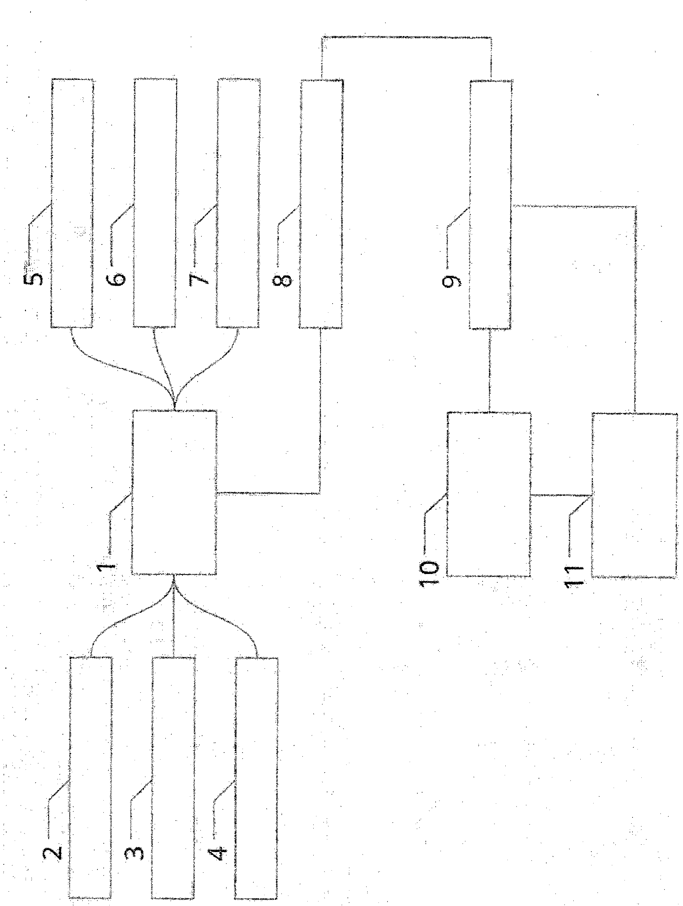

The invention, in an exemplary but not limiting embodiment, has been illustrated in the drawing, which shows a system for the acoustic detection of drones in particular.

The method for the acoustic detection of drones in particular is characterised in that the sound from the surroundings is processed by the microcontroller 1 in a first beamforming strip 2 and in a second beamforming strip 3 and in a SODAR 4. Data from the first beamforming strip 2 and the second beamforming strip 3 is transmitted by means of an I²S bus to the microcontroller 1, whereas the SODAR 4, as an analogue sound from a loudspeaker acting as a microphone, is subjected to conversion to a digital signal in an analogue-to-digital converter and is transmitted to the microcontroller 1. In the microcontroller 1, the data is processed by a beamforming algorithm to obtain 18 signals from the first beamforming strip 2 and from the second beamforming strip 3 and one SODAR 4 signal, and the microcontroller 1 preferably controls the sending of short signals to the surroundings to collect echoes from the first beamforming strip 2 and from the second beamforming strip 3 and the SODAR and calculates the device-to-drone distance based on the time of sending and reflection of the echoes.

Additional data on wind direction and speed, temperature, and humidity are taken from the meteorological station, and on the basis of correction tables, the data from the first beamforming strip 2 and the second beamforming strip 3 and the SODAR 4 are recalculated. The IMU and GPS sensor 6 is intended to provide information on the directionality and position of the system, the LTE modem 8 by means of which data is sent to the central computing computer 10, and the power supply system 7. The data is sent to the central computing computer 10 and the server 11 where it is processed for all modules located in the surveyed region and on the basis of triangulation and/or machine learning models, the exact location of the drone or other object is calculated, in turn the data from the central computing computer 10 is transmitted via the server 11 to the user via a website and are visualised.

A system for the acoustic detection of drones in particular comprises at least one microcontroller 1, which is connected on one side to a first beamforming strip 2 and/or a second beamforming strip 3, and/or a SODAR 4. On the other side, it is connected to a meteorological station 5, an IMU and GPS sensor 6, and a power supply system 7. The microcontroller 1 is connected via an LTE modem 8 and the internet 9 to a central computing computer 10, which is connected to a server 11. The LTE modem 8 is connected via the internet 9 to the server 11.

Sound from the surroundings is processed in the first beamforming strip 2 and in the second beamforming strip 3 and by the SODAR 4, when they are operated passively as dynamic microphones.

Additionally, coupled video cameras (not disclosed in the drawings), in the visible and infrared bands, supplement the detection with visualisation (wide-angle camera) and detailed context (narrow-angle camera), allowing for the identification of targets.

Acoustic data from the first beamforming strip 2 and the second beamforming strip 3 are transmitted by means of dedicated I²S buses or alternatively via PDM or PCM buses or any other format for high-speed acoustic data transmission to the microcontroller 1, while the SODAR 4, as an analogue sound from a loudspeaker acting as a microphone, is converted to a digital signal in an analogue-to-digital converter and transmitted via USB to the microcontroller 1, where in the microcontroller 1 the data is processed to obtain preferably 18 signals from the first beamforming strip 2 and the second beamforming strip 3, and one SODAR 4 signal.

In the active SODAR 4 mode, the microcontroller 1 controls the sending of short signals to the surroundings to collect echoes from the first beamforming strip 2 and the second beamforming strip 3 and the SODAR 4, and calculates the device-to-drone distance based on the time of sending and reflection of the echo.

The data processing is enhanced with other sensor data, such as wind direction and speed, temperature, and humidity, which are collected from the meteorological station 5, and based on correction tables, the data from the first beamforming strip 2 and the second beamforming strip 3 and the SODAR 4 are recalculated to account for environmental disturbances, while the IMU and GPS sensor 6 provides information on the direction and position of the system.

The data is also made available remotely via a dedicated LTE modem 8, by means of which the data is sent to a central computing computer 10, then the data is sent to the central computer 10 and the server 11, where it is processed for all modules located in the surveyed area, and the exact location of the drone or other object is calculated on the basis of triangulation and/or machine learning models, while the data from the central computing computer 10 is sent to the user via the internet 9 and visualised via a website.

The system for acoustic detection, particularly of drones, characterised in that it comprises at least one microcontroller 1, which is connected on one side to a first beamforming strip 2 and a second beamforming strip 3 and to a SODAR 4, and on the other side to a meteorological station 5, an IMU and GPS sensor 6, and a power supply system 7, furthermore the microcontroller 1 is connected via an LTE modem 8 and the Internet 9 to a central computing computer 10, which is connected to a server 11, where the LTE modem 8 is connected via the Internet 9 to the server 11.

The system for the acoustic detection of drones in particular comprises at least one microcontroller 1, which is connected on one side to a first beamforming strip 2 and a second beamforming strip 3 and to a SODAR 4, and on the other side to a meteorological station 5, an IMU and GPS sensor 6, and a power supply system 7, further the microcontroller 1 is connected via an LTE modem 8 and the internet 9 to a central computing computer 10, which is connected to a server 11, wherein the central computing computer 10 is connected via the internet 9 to the server 11.

The main SODAR 4 detection technology - using long-range loudspeakers - involves active and passive monostatic antennae. These loudspeakers can be controlled in an active emission mode to emit short, intense pulses of a sound beam that travel through the air, reach a flying target, and reflect back towards the emitting loudspeaker.

The loudspeaker then switches to a passive reception mode to detect faint echoes, thus implementing a SODAR 4 (Sound Detection And Ranging) system of active detectors.

A specially adapted electronic board was used, which shares the same loudspeaker and can be operated as an emitter in SODAR 4 mode and as a microphone for detecting SODAR 4 echoes or for direct passive scanning. The developed technology preserves ultra-low-noise pre-amplification stages during the active pulse phase, in which the emitted pulse power can be as high as 1 kilowatt or more.

This low-noise electronics provides a digitally controlled gain of preferably 1 million times (120 dB).

The preamplifier was designed to be resistant to the intense SODAR 4 emission phase and to become operational immediately after the emission pulses end.

The architecture also includes a configurable eighth-order band-pass filter (-3 dB passband: 0.96 * f_centre to 1.04 * f_centre [f_centre - centre frequency]).

This filter can be tuned to any source signal with a centre frequency in the entire audio range and is digitally controlled by a local FPGA (Field Programmable Gate Array). This feature is very effective in classifying, identifying, and tracking drone models, especially when the drone emits specific acoustic emission lines. The architecture uses a local FPGA to implement local FFT (Fast Fourier Transform) analysis or to control audio digitisation. Additionally, the long-range electronics support the implementation of a local Direct Digital Synthesiser (DDS) for programmable generation of SODAR 4 pulses.

### 1. Medium/short range

For medium-range detection, beamforming strips are used (the first beamforming strip 2 and the second beamforming strip 3). The beamforming strips contain linearly arranged MICs (microphones) and can be operated horizontally to focus on azimuthal targets, e.g., 105 degrees, or vertically to detect source directions in the polar range, e.g., 90 degrees. Both PDM (Pulse Data Modulation) category MEMS microphones and I²S MEMS devices are supported.

The FPGA core manages the sampling of the MIC array, controlling dedicated stereo I²S buses (4 buses for eight MICs) or processing a single PDM MIC data stream with dedicated CIC (Cascaded Integrator Comb) filters for data decimation and filtering.

After the data is acquired from the MIC array, from its I²S bus or from its CIC processing path 2 and 3, the associated PCM (Pulse-Code Modulation) value is placed in a memory matrix, which is time-shifted and acts as a First-In-First-Out device, but with an important difference from conventional FIFOs, data can be retrieved from any location for further combination and summation of beamforming data.

The matrix is managed by the FPGA core to implement beam focusing of any source, as explained below and illustrated in the attached drawing. The waveform generated from a distant audio source propagates towards the beamforming strips 2 and beamforming strips 3 - the microphone arrays [MIC] as a flat waveform (red dashed line) approaching the MIC array at a certain angle. The microphones on the right side of the strip will detect the waveform first, while those on the left will detect the same waveform front with a certain delay (green dashed lines). To maintain correct phase correlation, the data samples must be summed with appropriate delays. In this case, the data from the first right MIC must be preserved for the entire time until the waveform reaches the last MIC on the left, let's call it MIC_1 (T0), at time T0. This data can be summed with other data from the microphones on the right only if we consider the sample closest in time to the delay that the waveform requires for the sound to reach the respective MIC. To assess this, we need to combine the speed of sound, typically 345 m/s, with the spacing between the microphones. Assuming the physical spacing between one microphone and the next is 4 cm. If the source is at an angle of 45°, it is known that the second microphone will have to wait for a shorter time than that needed for the wave front to reach the first microphone on the left. This can be estimated at 1/345 * 0.04 sin(45°) = 81.98 µs. For an I²S sampling frequency of 48 kHz (i.e., sampling every 20.83 µs), it is clear that the nearest sample in phase with the one currently acquired by the far-left microphone was acquired 81.98/20.83 = 3.93 steps earlier, i.e., the data acquired 4 steps earlier by MIC_2, and so on for the remaining microphones. If we repeat the same calculation for MIC_8, we get (0.04*7/345 *sin(45)/20.83) = 27.55 or about 28 samples earlier. Therefore, we need at least 32 memory cells to handle a sufficiently large field of view - FOV (52.71° per side or 105.42° in the given example). This example shows that the higher the sampling frequency, the better the resolution for the orientation and sampling of the plane on which the beam is to be focused. PDM MEMS microphones are more attractive in this respect due to their high sampling frequency (typically exceeding 3 MHz), but they require more resources to implement CIC filtering.

The implemented multiport MIC memory with a shifting matrix of data samples enables parallel detection and tracking of multiple targets. The ability to simultaneously extract multiple focusing planes, defined by the appropriate assignment of a delay to each microphone, is an inherent feature of this solution. This approach allows for a potentially unlimited number of audio buses, each dedicated to tracking a different target, enabling the simultaneous monitoring of multiple drones. A standard I²S bus with a 192 kHz clock can transmit data from up to 8 microphones sampled at 48 kHz for remote host processing. There are no limits on the number of microphones that can be processed using the chosen approach; limitations arise only from the physical capabilities of the FPGA. To address this, a 16-microphone PDM version organised in a 4x4 matrix was implemented, which can be integrated into a larger mosaic consisting of up to 128 MICs. Most of the described functionalities can be performed, for example, using a small Xilinx Spartan 6 FPGA, including CIC filtering.

To evaluate the performance of a single MEMS device, a 4 kHz noise source emitted by a standard mobile phone was recorded in an open field. A simple miniature earbud speaker placed in front of a single MEMS microphone can increase the antenna's sensitivity by up to 12 dB, slightly reducing the cardioid aperture from about 180° to 60° or more. This modification enables a detection distance of up to 750 m to be achieved even with a single microphone.

### 2. Signal Processing

A network of loudspeakers distributed over a specific area enables proper operation. When operating in active SODAR 4 mode, the signal source can be identified by measuring the travel distances on the echo trace of each loudspeaker. When operating in passive listening mode, a broad localisation of a potential emission can be achieved by estimating the source centroid based on the signal strength of the received signals at different loudspeakers.

The optimisation of signal acquisition and pre-processing has been discussed above. The detection of a real threat from a drone requires expert system analysis. A fragment of the data stream is analysed using FFT to extract precise spectral information, which is then compared with typical, similar acoustic traces of drones emitted to maintain flight. The matching can be further refined using a Machine Learning (ML) methodology once an appropriate network has been trained on similar signals.

A new acoustic discrimination methodology has been implemented, based on the same photometric procedures used to detect faint stars, which provides similar FFT results but in a faster manner. This methodology is based on the practical fact that the drone's emission spectrum does not change significantly over a short period. To this end, we record the trace for about ¼ of a second and subtract a moving and filtered average of the previous quarter-second of background. Then we perform a broad scan in the range from 2 kHz to 8 kHz (lower frequencies are usually dominated by anthropogenic noise, and sound above 8 kHz is strongly attenuated with distance), summing the samples that should be in phase for the analysed frequency. For example, if we are looking for a 2 kHz emission, it is clear that its maximum will reappear in the data stream every 500 µs. Summing these samples maximises the signal for this specific frequency, while other frequencies tend to fade out. To ensure that we are at the maximum, we appropriately shift all possible phases within the sampling frequency until the sum for that specific frequency is maximised. This process is repeated for all frequencies in the 2 kHz-8 kHz range. Finally, for broader and stationary analyses, the various quarter-second results are summed to increase the signal-to-noise ratio.

### System sensors, data input, and data processing

The system includes a set of sensors that provide data on the position of the detectors in time and space. Regardless of whether the system is stationary or portable, it includes a group of IMU and GPS 6 sensors, including an inertial measurement unit (IMU) and Global Navigation Satellite Systems (GNSS) positioning sensors, and environmental sensors such as temperature and humidity (both inside and outside the device), wind direction, and atmospheric pressure from a meteorological station 5.

The IMU consists of three groups of sensors: an accelerometer, which measures the temporary movement of the detectors (e.g., during use in vehicles or on boats); a gyroscope, which provides information about the device's tilt, especially during movement, and influences the processing algorithms to determine the drone's position; and a magnetometer, which tracks the angle between magnetic north and the detection direction, enabling precise directional detection.

GNSS is an electromagnetic wave detector that receives signals from satellite systems, such as GPS or Galileo. A key aspect of the system is its spatial position, determined from GNSS data such as latitude, longitude, and altitude. The altitude data further influences the algorithm, contributing to pressure correction calculations in conjunction with the pressure sensor data described in the next paragraph. Another critical element obtained from GNSS data is the precise determination of time, which enables data synchronisation between modules. Although time synchronisation between devices can be achieved by other methods, GNSS significantly simplifies local calculations and ensures high precision of these calculations.

Environmental sensors enable the calculation of data corrections. The speed of sound, the behaviour of sound waves, propagation, and refraction are physical properties that must be considered during calculations. For this reason, data from these sensors are included in the calculations. The calculation method involves creating correction tables based on the presented conditions, which can be two-, three-, or even four-dimensional. For example, wind will be considered as a four-dimensional correction factor, as it changes in both space and time, meaning that the distance from the detected object and the travel time of the sound wave in an environment with variable wind must be calculated in multiple dimensions.

Additionally, the device integrates topographical and land use maps, which are used to generate additional correction tables. For example, the surface roughness (terrain + vegetation) and the way sound waves reflect differ between grassy and concrete airfields or agricultural fields. Topography also affects wave reflection. It is possible to download elevation maps into the model from any source or to automatically download them from servers, such as those from the Shuttle Radar Topography Mission (SRTM). There are various approaches to processing data from these sources. All data from the sound-collecting devices are preferably subjected to FFT (Fast Fourier Transform) processing. Given the large number of harmonics present in the sound signals of propellers, a classifier model based on machine learning (ML) has been applied, in which data is processed in very short intervals, preferably 40 ms, while simultaneously considering older data sequences spanning several seconds, in samples of preferably 40 ms. The data is processed in 19 independent chains (2x9 for beamforming and 1 for the main detector). Upon detecting a drone in any of the chains, a position detection process is initiated. The data can be processed directly in the module or transmitted by any medium to a central server 11 for further analysis. The fundamental frequency and its harmonics are determined for all rotors, and corrections are applied based on correction tables from all sensors, such as direction, tilt, speed and position of the device, temperature, pressure, humidity, and wind direction and strength. Custom correction tables can be uploaded to the device. At this stage, the data is ready for analysis. The position of each rotor is calculated based on triangulation, which enables more accurate position detection and simultaneous tracking of multiple drones. Another tested approach is a multi-module machine learning method based on techniques such as the Mel-frequency cepstral coefficient (MFCC) or linear prediction cepstral coefficients (LPCC) with support vector machines (SVM) or long short-term memory (LSTM), convolutional neural networks (CNN), or a multi-module approach combining MFCC, Gammatone cepstral coefficients (GTCC), linear prediction coefficient (LPC), zero-crossing rate (ZCR), and short-range (SRO).

## Claims

1. A method for the acoustic detection of drones in particular, **characterised in that** sound from the surroundings is processed in a first beamforming strip 2 and in a second beamforming strip 3 and in a SODAR 4, wherein data from the first beamforming strip 2 and the second beamforming strip 3 is transmitted by means of an 1²5 bus, whereas the SODAR 4, as an analogue sound from a loudspeaker acting as a microphone, is subjected to conversion to a digital signal in an analogue-to-digital converter and is transmitted to a microcontroller 1, where in the microcontroller 1 the data is processed by a beamforming algorithm to obtain 18 signals from the first beamforming strip 2 and from the second beamforming strip 3 and one SODAR signal, and the microcontroller 1 preferably controls the sending of short signals to the surroundings to collect echoes from the first beamforming strip 2 and from the second beamforming strip 3 and the SODAR 4 and calculates the device-to-drone distance based on the time of sending and reflection of the echoes, additional data on wind direction and speed, temperature, and humidity are taken from a meteorological station 5 and on the basis of correction tables, the data from the first beamforming strip 2 and from the second beamforming strip 3 and the SODAR 4 are recalculated, whereas an IMU and GPS sensor 6 is intended to provide information on the directionality and position of the system, an LTE modem 8 by means of which data is sent to a central computing computer 10, and a power supply system 7, further the data is sent to the central computing computer 10 and a server 11 where it is processed for all modules located in the surveyed region and on the basis of triangulation and/or machine learning models, the exact location of the drone or other object is calculated, in turn the data from the central computing computer 10 is transmitted to the user via a website and are visualised.

2. A system for the acoustic detection of drones in particular, **characterised in that** it comprises at least one microcontroller 1, which is connected on one side to a first beamforming strip 2 and/or to a second beamforming strip 3 and/or to a SODAR 4, and on the other side to a meteorological station 5, an IMU and GPS sensor 6, and a power supply system 7, further the microcontroller 1 is connected via an LTE modem 8 and the internet 9 to a central computing computer 10, which is connected to a server 11, wherein the LTE modem 8 is connected via the internet 9 to the server 11.
